# EUROPÄISCHE PATENTSCHRIFT

(11) **EP 0 706 815 B1**
(45) Veröffentlichungstag und Bekanntmachung des Hinweises auf die Patenterteilung: **12.08.1998**
(21) Anmeldenummer: 95114996.2
(22) Anmeldetag: 23.09.1995
(51) Int. Cl.: B01D 53/64

(54) **Verfahren zur Abscheidung von Quecksilber aus Verbrennungsabgasen von Klärschlammverbrennungsanlagen**
Process for mercury removal from fine gases resulting from the combustion of sewage sludge
Procédé d'élimination de mercure de gaz provenant de la combustion des bones d'épuration

(30) Priorität: 13.10.1994 DE 4436612
(43) Veröffentlichungstag der Anmeldung: 17.04.1996
(73) Patentinhaber: Forschungszentrum Karlsruhe GmbH, 76133 Karlsruhe (DE)
(72) Erfinder: Braun, Hartmut, Dr., D-76199 Karlsruhe (DE); Vogg, Hubert, Prof. Dr., D-76139 Karlsruhe (DE)

(56) Entgegenhaltungen:
- DE-C- 4 315 138
- US-A- 5 009 871

## Beschreibung

Die Erfindung betrifft ein Verfahren zur Abscheidung von Quecksilber aus Verbrennungsabgasen nach dem Oberbegriff des Patentanspruchs 1.

Klärschlamm-Verbrennungsanlagen haben derzeit große Schwierigkeiten bei der Einhaltung des Grenzwertes von 50 µg/m³ der 17. BImSchV für die Abscheidung von Quecksilber. Das Problem bei der Klärschlamm-Verbrennung besteht in der im Rauchgas vorhandenen hohen Konzentration an metallischem Quecksilber (Hg^{o}). Infolge des ungünstigen SO₂/HCl-Verhältnisses im Rauchgas ist die Reaktion zu HgCl₂ unvollständig. Dieses ist aber für die Abscheidung in einem Naßwäscher wichtig. Für Klärschlammverbrennungsanlagen reichen deshalb die üblichen Naßwasch-Systeme zur Abscheidung nicht aus, wie das bei Hausmüll-Verbrennungsanlagen möglich ist. Erschwerend kommt hinzu, daß infolge des hohen SO₂-/ niedrigen HCl-Gehaltes eine Rückbildung des HgCl₂ zu Hg^{o} durch Reduktion in den Wäschern stattfinden kann, das dann wieder in den Abgasstrom freigesetzt wird.

Zusätzlich zum Quecksilberproblem können Klärschlamm-Verbrennungsanlagen die an sie gestellte Forderung einer ausreichenden SO₂-Abscheidung wegen des hohen Inputs oft nicht nachkommen.

Die heute angebotenen Maßnahmen zur Einhaltung eines niedrigen Emissionsgrenzwertes bestehen in der adsorptiven Abscheidung von Quecksilber an kohlenstoffhaltigem Material. Als Varianten werden die Dosierung eines Kalk/Koks-Gemisches vor Gewebefilter bzw. ein den Wäschern nachgeschalteter Aktivkoks-Festbettreaktor diskutiert. Mit dieser "Kohletechnologie" lassen sich heute sicherlich die geforderten Grenzwerte nicht nur für Quecksilber einhalten. Der Nachteil ist, daß bei diesen nachrangigen Schadstoff-Minderungsmaßnahmen immer ein Entsorgungsproblem von Quecksilber- und Schwefelsäure-beladenen Rückständen den auftritt. Diese müssen für teures Geld untertägig abgelagert werden.

Aus der DE 41 17 477 A1 ist ein Verfahren der Gattungsgemäßen Art bekannt. Dabei soll die Bildung von Dioxinen und Furanen minimiert werden. Da hierbei sowohl Flugstaub, Schwefeldioxid und Kohlenmonoxid aufoxidiert werden wird eine große Menge Oxidationsmittel verbraucht.

Des weiteren ist aus der DE 43 15 138 ein Verfahren zur Entfernung von Hg aus den Rauchgasen von Klärschlammverbrennungsanlagen bekannt, bei welchem das Hg in einer nachgeschalteten Waschstufe mit einer wässrigen, sauren Lösung abgeschieden wird. Zur Optimierung dieses Verfahrens müssen dieser nachgeschalteten Waschstufe Chloride zugesetzt werden.

Die US-A-5 009 871 beschreibt ein Verfahren zur Abscheidung von Quecksilber aus Verbrennungsabgasen von Müllverbrennungsanlagen, bei welchem die Flugstäube durch Staubfilter und die gasförmigen Schadstoffe durch Nasswäscher entfernt werden wobei eine wässrige Lösung von Wasserstoffperoxid in einen dem Staubfilter nachgeordneten Nasswäscher eingebracht wird.

Aufgabe der Erfindung ist es, ein Verfahren der e. g. Art so auszugestalten, daß nur soviel Oxidationsmittel eingesetzt wird, wie zur Abreicherung des Quecksilbers benötigt wird.

Gelöst wird diese Aufgabe durch die Merkmale des Patentanspruchs 1. Die Unteransprüche beschreiben vorteilhafte Ausgestaltungen des Verfahrens.

Ein besonderer Vorteil der Erfindung besteht darin, daß das Abscheidungsproblem für Quecksilber durch primäre Maßnahmen gelöst wird. Quecksilberbeladene Filtermaterialien fallen dadurch nicht mehr an.

Dabei wird das im Rauchgas vorhandene metallische Quecksilber (Hg^{o}) zu einwertigem bzw. zweiwertigem Quecksilber (Hg₂⁺⁺, Hg⁺⁺) oxidiert, das sich anschließend im Naßwäscher abscheiden läßt. Im Prinzip ist jedes Oxidationsmittel denkbar. Besonders einfach in der Handhabung und kostengünstig ist die 30 oder 35 %ige Lösung von Wasserstoffperoxid (H₂O₂) in Wasser, die in den Rauchgasstrom eingedüst wird. Die Verwendung von H₂O₂ hat den Vorteil, daß dieses sich rückstandsfrei und schadstofffrei in Wasser und aktiven Sauerstoff zersetzt.

Die im Abgasstrom enthaltenen Flugstäube wirken reduzierend, was zu einem erhöhten Verbrauch des Oxidationsmittels führen würde. Deshalb wird erfindungsgemäß das Oxidationsmittel nach der üblichen Staubabscheidung eingebracht. Dies hat neben der Einsparung an Oxidationsmittel den Vorteil, daß das ionische oxidierte Hg nicht mehr durch den Flugstaub rückreduziert wird.

Ein weiterer Vorteil der Erfindung besteht darin, daß das Oxidationsmittel bei geeigneter Reaktionstemperatur auch mit dem SO₂ reagiert und es zum großen Teil zu SO₃ oxidiert. Das führt zu dessen besserer Abscheidung, und zwar bereits in der sauren Waschstufe, und entlastet den Neutralwäscher, der nur noch Restmengen an SO₂ abscheiden muß. Das führt zu einer deutlichen Emissionsminderung für SO₂. Gleichzeitig ist die Möglichkeit der Rückbildung von Hg^{o} durch Reduktion stark eingeschränkt.

Die Reaktion mit SO₂ läßt sich durch Wahl der Temperaturstelle für das Eindüsen von H₂O₂ in die gewünschte Richtung steuern. Unterhalb von 240 °C findet die Oxidation zu SO₃ nicht statt. Das führt zu einem wesentlich geringerem Verbrauch von Oxidationsmittel und vermeidet die Bildung von hochkorrosiver Schwefelsäure. Dies ist wichtig bei der Nachrüstung von Altanlagen, welche keinen ausreichenden Korrosionsschutz auf weisen.

Die Oxidation kann bis zum Taupunkt des Rauchgaskomponenten erfolgen. Die Reaktionszeit des Oxidationsmittel mit dem Rauchgas sollten mindestens eine Sekunde betragen bevor die Naßwäsche erfolgt. Nach fünf Sekunden ist die Oxidation nahezu vollständig.

Ein weiterer Vorteil der Erfindung liegt darin, daß vorhandene Anlagen ohne größeren Investitionsaufwand und ohne notwendigen Platzbedarf nachgerüstet werden können. Die Kosten für Betriebsmittel sind gegenüber der Kohletechnologie gering, und es fallen vor allem keine Entsorgungskosten an, da keine Rückstände erzeugt werden.

Die Erfindung wird im folgenden anhand zweier Beispiele mit Hilfe der Figuren näher erläutert.

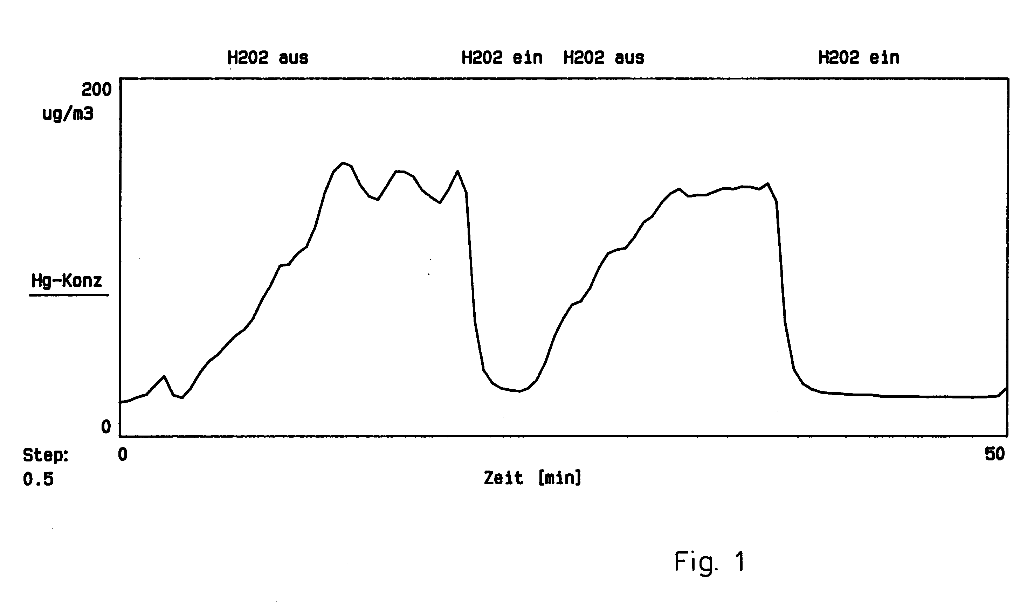

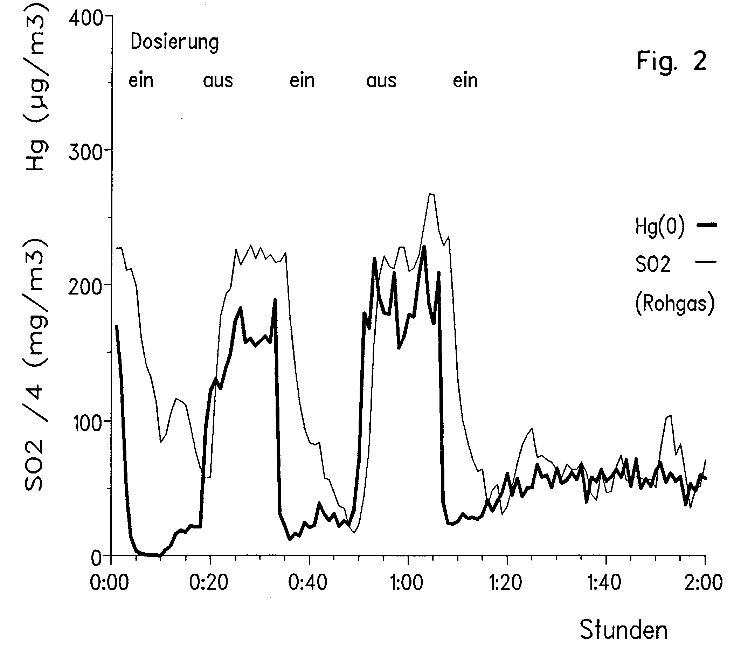

Dabei zeigt die Fig. 1 die Quecksilberkonzentration einer Rauchgasprobe mit und ohne Oxidationsmittel und die Fig. 2 zusätzlich noch die Schwefeldioxidkonzentration.

In einem Ausführungsbeispiel wird ein Teilgasstrom von 4 m³/h Rauchgas feucht dem Abgas hinter Elektrofilter entnommen. In diesen Teilstrom wird mittels einer Kolbenpumpe beispielsweise 10 ml/h H₂O₂ zugegeben. Mittels eines Quecksilber-Monitors, der allein die Hg^{o}-Komponente kontinuierlich im Rauchgas mißt, wird die Quecksilberkonzentration aufgezeichnet. Die Fig. 1 zeigt den Verlauf der Quecksilber-Konzentration im Rauchgas in Abhängigkeit von der zudosierten Oxidatiosmittelmenge. Bei zudosiertem Oxidationsmittel fällt die Quecksilberkonzentration von 150 µg/m³ auf 20 µg/m³. Das bedeutet, daß die Hauptmenge des Quecksilbers jetzt in oxidierter Form vorliegt und mit dem Naßwäscher abgeschieden werden kann. Wird die Zuführung gestoppt, dann steigt die Hg- Konzentration wieder auf ihren ursprünglichen Wert an. Dieser Verlauf wiederholt sich, wie der weitere Verlauf der Kurve zeigt.

In einem zweiten Ausführungsbeispiel wurde eine KSVA mit einer Durchsatzleistung von 1,5 t/h (TS) und einem Rauchgas-Volumenstrom von 17000 m³/h i.N.tr. insoweit nachgerüstet, daß nach Elektrofilter eine Eindüsung einer 35 %igen Lösung von H₂O₂ möglich war. Bei einer Menge von 50 l/h ergab die On-line-Messung von Hg^{o} die Meßkurve der Fig. 2. Die Quecksilber-Konzentration im Rohgas fällt von ca. 200 µg/m³ auf 10 - 20 µg/m³.

Das bedeutet, daß die Hauptmenge des Quecksilbers auch hier in oxidierter Form vorliegt und mit dem Naßwäscher abgeschieden wird. In der gleichen Abbildung ist die On-line-Meßkurve für SO₂ mit eingezeichnet. Die SO₂-Konzentration im Rauchgas sank bei der Dosierung von ca. 900 mg/m³ auf 200 mg/m³. Das Rauchgas hatte eine Temperatur von 250° C.

Durch die Regelung der Menge des zugegebenen Oxidationsmittels auf den einzuhaltenden Hg-Grenzwert mit Hilfe eines Quecksilbermonitors ist es immer möglich, mit einer minimalen Menge an Oxidationsmittel zu arbeiten. Für die Anfangsmenge an Oxidationsmittel, bevor die Regelung greift, genügt eine grobe Abschätzung.

## Patentansprüche

1. Verfahren zur Abscheidung von Quecksilber aus Verbrennungsabgasen von Klärschlammverbrennungsanlagen, bei welchem die Flugstäube durch Staubfilter und die gasförmigen Schadstoffe durch Naßwäscher entfernt werden und wobei ein Oxidationsmittel in den Abgasstrom eingebracht wird , dadurch gekennzeichnet, daß das Oxidationsmittel eine wäßrige Lösung von Wasserstoffperoxid, welche in einen dem Staubfilter nachgeordneten Bereich vor den Naßwäschern eingebracht wird, wobei die Reaktionstemperatur zwischen 80° und 300° C liegt.

2. Verfahren nach Anspruch 1, dadurch gekennzeichnet, daß die Menge des Oxidationsmittels mit Hilfe eines im Abgasstrom nachgeordneten Quecksilber- Monitors auf einen Soll-Emissionswert des Quecksilbers eingeregelt wird.

3. Verfahren nach Anspruch 1 oder 2, dadurch gekennzeichnet, daß das Oxidatiosmittel bei einer Reaktionstemperatur zwischen 80° C und 240° C in den Abgasstrom eingebracht wird.

4. Verfahren nach Anspruch 1 oder 2, dadurch gekennzeichnet, daß das Oxidatiosmittel bei einer Reaktionstemperatur zwischen 240° C und 300° C in den Abgasstrom eingebracht wird.

## Claims

1. Process for the separation of mercury from the exhaust gases of sewage sludge incineration plants with the flue dusts and the gaseous pollutants being removed by dust filters and wet scrubbers, respectively, and with an oxidant being introduced into the exhaust gas flow, characterized by this oxidant being an aqueous solution of hydrogen peroxide, which is introduced downstream of the dust filter and upstream of the wet scrubbers at a reaction temperature ranging between 80°C and 300°C.

2. Process according to Claim 1, characterized by the use of a mercury monitor in the exhaust gas flow, by means of which the oxidant volume is set such as to remain below the mercury emission limit specified.

3. Process according to Claim 1 or Claim 2, characterized by the oxidant being introduced into the exhaust gas flow at a reaction temperature ranging between 80°C and 240°C.

4. Process according to Claim 1 or Claim 2, characterized by the oxidant being introduced into the exhaust gas flow at a reaction temperature ranging between 240°C and 300°C.

## Revendications

1. Procédé d'élimination du mercure des gaz d'échappement de combustion d'installations de combustion de boues d'épuration, dans lequel les cendres volantes sont retirées par des filtres à poussière et les gaz nocifs par des appareils de lavage par voie humide et dans lequel on introduit un oxydant dans le courant de gaz d'échappement,
caractérisé en ce que
l'oxydant est une solution aqueuse de peroxyde d'hydrogène qui est introduite dans une zone disposée à la suite du filtre à poussière avant les appareils de lavage par voie humide, et où la température de la réaction se situe entre 80 et 300°C.

2. Procédé selon la revendication 1,
caractérisé en ce qu'
on règle la quantité d'oxydant à l'aide d'un appareil de contrôle du mercure disposé dans le gaz d'échappement à la valeur d'émission du mercure recherchée.

3. Procédé selon la revendication 1 ou 2,
caractérisé en ce qu'
on amène l'oxydant à une température réactionnelle comprise entre 80°C et 240°C dans le gaz d'échappement.

4. Procédé selon la revendication 1 ou 2,
caractérisé en ce qu'
on amène l'oxydant à une température de réaction comprise entre 240°C et 300°C dans le gaz d'échappement.
